# EUROPEAN PATENT APPLICATION

(11) **EP 2 587 040 A2**
(43) Date of publication of application: **01.05.2013**
(21) Application number: 12185650.4
(22) Date of filing: 24.09.2012
(51) Int. Cl.: F02K 9/52

(54) **Injector having Multiple Impingement Lengths**

(30) Priority: 24.09.2011 US 201161538810 P; 09.05.2012 US 201213467238
(71) Applicant: United Technologies Corporation, Hartford, CT 06101 (US)
(72) Inventor: Jensen, Robert J., Thousand Oaks, CA California 91360 (US)
(74) Representative: Leckey, David Herbert

(57) **Abstract**

An injector (22) includes an injector body (40) that has at least an injection side surface (32). A plurality of passages (50) extends within the injector body (40) for injecting combustion fluids at the injection side surface (32). The plurality of passages include a first set of passages (52a) that has a first arrangement defining a first impingement point (28) in space with regard to the injection side surface (32) and a second, different set of passages (52b) that has a second arrangement defining a second impingement point (34) in space with regard to the injection side surface (32). The first impingement point (28) and the second impingement point (34) are non-equidistant from the injection side surface (32).

## Description

### BACKGROUND

This disclosure relates to injectors, such as injectors that are used to inject combustion fluids.

Injectors are known and used to spray or atomize fluids. The fluids may be combustion fluids, such as an oxidizer and a fuel that are ignited to provide thrust. A typical injector includes a fuel passage and an oxidizer passage that are angularly oriented relative to one another such that the fuel and the oxidizer impinge and mix at a downstream location from the injector. Other injector designs may include internal features other than angularly oriented passages to produce impinging sprays.

### SUMMARY

An injector according to an exemplary aspect of the present disclosure includes of an injector body having at least an injection side surface and a plurality of passages that extends within the injector body for injecting combustion fluids at the injection side surface. The plurality of passages include a first set of passages having a first arrangement that defines a first impingement point in space with regard to the injection side surface. A second, different set of passages has a second arrangement that defines a second impingement point in space with regard to the injection side surface, and the first impingement point and the second impingement point are non-equidistant from the injection side surface.

In a non-limiting embodiment, the plurality of passages extends along respective directional axes, and the respective directional axes of the first set of passages form a first angle and the respective directional axes of the second set of passages form a second, different angle.

In a further non-limiting embodiment of any of the foregoing examples, each of the plurality of passages includes an outlet orifice, and the respective outlet orifices of the first set of passages are offset from the impingement side surface.

In a further non-limiting embodiment of any of the foregoing examples, the plurality of passages extends along respective directional axes, and the first arrangement and the second arrangement are each converging arrangements such that respective directional axes of the first set of passages intersect at the first impingement point and the respective directional axes of the second set of passages intersect at the second impingement point.

In a further non-limiting embodiment of any of the foregoing examples, the first impingement point is forward of the injector side surface and the second impingement point is aft the injector side surface.

In a further non-limiting embodiment of any of the foregoing examples, at least one of the first set of passages or the second set of passages have non-equal cross-sectional areas.

In a further non-limiting embodiment of any of the foregoing examples, the first set of passages and the second set of passages have equal cross-sectional areas.

In a further non-limiting embodiment of any of the foregoing examples, one passage of the first set of passages and one passage of the second set of passages have non-equal cross-sectional areas.

In a further non-limiting embodiment of any of the foregoing examples, at least one passage of the first set of passages and at least one passage of the second set of passages split from a common passage.

In a further non-limiting embodiment of any of the foregoing examples, the second set of passages split from a common passage from which at least one of the first set of passages also splits from.

In a further non-limiting embodiment of any of the foregoing examples, at least one of the plurality of passages has a directional axis that is perpendicular to the injection side surface.

In a further non-limiting embodiment of any of the foregoing examples, the first set of passages and the second set of passages each have a respective passage with a respective directional axes perpendicular to the injector side surface.

A thruster according to an exemplary aspect of the present disclosure includes a combustion chamber having an internal combustion zone and an injector having an injector body with at least an injection side surface that bounds the combustion zone. The injector body includes a plurality of passages that extends within the injector body for injecting combustion fluids into the combustion zone. The plurality of passages includes a first set of passages having a first arrangement that defines a first impingement point in space with regard to the injection side surface. A second, different set of passages has a second arrangement that defines a second impingement point in space with regard to the injection side surface, and the first impingement point and the second impingement point are non-equidistant from the injection side surface.

In a further non-limiting embodiment of any of the foregoing examples, a fuel source and an oxidizer source are fluidly connected with the injector.

A method of controlling combustion of fluids according to an exemplary aspect of the present disclosure includes injecting a first stream and a second stream through respective passages of a first set of passages within an injector body such that the first stream and the second stream impinge at a first impingement point in space relative to an injector side surface of the injector body and injecting a third stream and a fourth stream through respective passages of a second, different set of passages within the injector body such that the third stream and the fourth stream impinge at a second impingement point in space. The first impingement point and the second impingement point being non-equidistant from the injection side surface.

In a non-limiting embodiment, the third stream is an oxidizer stream and the fourth stream is a fuel stream, and including injecting the oxidizer stream and the fuel stream to impinge with a non-stoichiometric combustion ratio.

In a further non-limiting embodiment of any of the foregoing examples, the first stream and the second stream are each oxidizer streams.

### BRIEF DESCRIPTION OF THE DRAWINGS

Figure 1 illustrates an example thruster.
Figure 2 illustrates a cross-section of an example injector.
Figure 3 illustrates a cross-section of another example injector.
Figure 4 illustrates a cross-section of another example injector.
Figure 5 illustrates a cross-section of another example injector.
Figure 6 illustrates a cross-section of another example injector.

### DETAILED DESCRIPTION

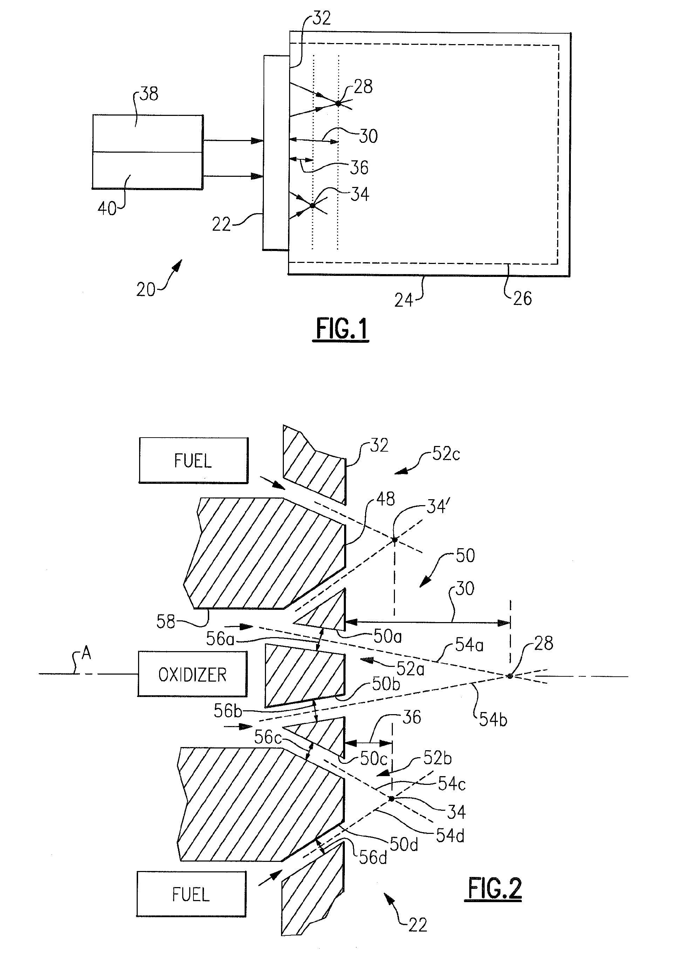

Figure 1 schematically illustrates selected portions of an example thruster 20, such as a thruster 20 of an aircraft or aerospace vehicle. The disclosed thruster 20 serves as an example environment for an injector 22, as will be described in more detail below. It is to be understood that the disclosed thruster 20 is not limited to the illustrated arrangement, nor is the exemplary injector 22 limited to use in the thruster 20.

In the illustrated example, the thruster 20 includes a combustion chamber 24 having an internal combustion zone 26 in which combustion fluids, such as fuel and oxidizer, are ignited to provide thrust. The injector 22 provides for injection of streams of the combustion fluids into the combustion zone 26. The injector 22 injects the combustion fluids such that a portion of the fluids impinge at a first impingement point 28 that is located a linear length 30 from an injection side surface 32 of the injector 22. Another portion of the combustion fluids are injected such that the streams impinge at a second impingement point 34 that is located a linear length 36 from the injection side surface 32. For purposes of this disclosure, points aft of the injection side surface 32 (into the combustion zone 26) represent positive lengths and points forward of the injection side surface 32 represent negative lengths. The lengths 30 and 36 are non-equidistant. In the illustrated example, the length 30 is greater than the length 36.

The non-equidistant lengths 30 and 36 provide distributed mixing of the combustion fluids within the combustion zone 26. That is, a portion of the combustion fluids are mixed at a relatively close proximity to the injection side surface 32 and another portion of the combustion fluids are mixed at a relatively far proximity from the injection side surface 32 to provide an elongated combustion region. The elongated combustion region stabilizes combustion, facilitates thermal management and provides more reliable thrust or impulse.

Optionally, the thruster 20 includes an oxidizer source 38 and a fuel source 40 for providing the oxidizer and fuel to the injector 22. As can be appreciated, the thruster 20, oxidizer source 38 and fuel source 40 may be components of a vehicle, such as an aircraft or aerospace vehicle.

Figure 2 illustrates a cross-section of through a portion of the injector 22. In this example, the injector 22 includes an injector body 48 through which a plurality of passages 50 extends. The plurality of passages 50 includes a first set of passages 52a that includes passages 50a and 50b, and a second, different set of passages 52b that includes passages 50c and 50d. It is to be understood that the injector 22 can also include additional passages or sets of passages. As shown in Figure 2, the plurality of passages 50 also includes a third set of passages 52c that is symmetric with the second set of passages 52b about a central axis A.

As will be described, each of the first set of passages 52a and the second set of passages 52b (and the optional third set of passages 52c) has a respective arrangement that defines the location of the corresponding impingement points 28 and 34 that are non-equidistant with regard to the injector side surface 32. For example, the arrangements can differ with respect to angles of the plurality of passages 50, spacing between the plurality of passages 50, relative aft/forward location of outlet orifices of the plurality of passages 50 or any combination thereof to achieve the non-equidistant lengths 30 and 36 of the respective impingement points 28 and 34.

Figure 2 represents an example wherein the angles of the plurality of passages differ to produce the non-equidistant lengths 30 and 36 of the respective impingement points 28 and 34. Each of the plurality of passages 50 extends within the injector body 48 along respective directional axes 54a, 54b, 54c and 54d. For example, the directional axes 54a-d are the central axes of the respective passages 50a-d and represent the direction of fluid flow through the passages 50a-d.

The directional axes 54a and 54b of the first set of passages 52a intersect at the first impingement point 28 and the directional axes 54c and 54d of the second set of passages 52b intersect at the second impingement point 34. For example, the axes 54a and 54b form a first angle there between and the axes 54c and 54d form a second angle there between that is different than the first angle such that the different lengths 28 and 36 are produced. The axes of the third set of passages 52c intersect at impingement point 34' that is also at the linear length 36 from the injection side surface 32.

Each of the plurality of passages 50 also has a respective cross-sectional area 56a, 56b, 56c and 56d. The size of the passages 56a-d, as represented by the cross-sectional areas 56a-d, is one factor that controls or influences the mass flow of combustion fluid through the passages 50a-d. The sizes can therefore be tailored to achieve desired mixture ratios and combustion profiles. In general, mass flow of a combustion fluid through the plurality of passages 50 of the injector 22 is a product of the density of the combustion fluid, cross-sectional area of the plurality of passages 50 through which the combustion fluid flows and the average velocity of the combustion fluid. Thus, for a given combustion fluid density, given number of passages 50 through which the combustion fluid flows and given average velocity, the cross-sectional area of the passages 50 which the combustion fluid flows though controls the mixture ratio.

In embodiments, the passages 50a and 50b of the first set of passages 52a have equal cross-sectional areas 56a and 56b and the passages 50c and 50d of the second set of passages 52b have equal cross-sectional areas 56c and 56d. In a further example, the cross-sectional areas 56a and 56b are individually equal to each of the cross-sectional areas 56c and 56d.

In another embodiment, the passages 50a and 50b of the first set of passages 52a have equal cross-sectional areas 56a and 56b and the passages 50c and 50d of the second set of passages 52b have equal cross-sectional areas 56c and 56d. The cross-sectional areas 56a and 56b of the first set of passages 52a are individually non-equal to each of the cross-sectional areas 56c and 56d of the second set of passages 52b.

In another example, at least one of the cross-sectional areas 56c and 56d is larger than the other and optionally is different than or larger than each of the cross-sectional areas 56a and 56b of the first set of passages 52a.

The fluid that flows into and through the respective passages 50a-d depends upon how the passages 50a-d are split and connected to the oxidizer source 38 and fuel source 40, for example. As shown in Figure 2, the injector 22 includes a main, common passage 58 from which passages 50a, 50b and 50c split from. One of the passages in the third set of passages 52c also splits from the common passage 58. For instance, the common passage 58 is connected with the oxidizer source 38. The passage 50d is connected with the fuel source 40.

In examples of the operation of the injector 22, oxidizer is provided to the common passage 58 to flow into and from the passages 50a-c and fuel is provided to the passage 50d. The cross-sectional areas 56a-d are tailored to produce desired mixture ratios and combustion profiles of the oxidizer and fuel.

In a further example, the passages 50a and 50b of the first set of passages 52a have equal cross-sectional areas 56a and 56b and the passages 50c and 50d of the second set of passages 52b have equal cross-sectional areas 56c and 56d to produce mixture ratios at the impingement points 28 and 34. In comparison, where the cross-sectional area 56d is larger than the cross-sectional area 56c and the cross-sectional areas 50a and 50b are equal, there are different mixture ratios at the impingement points 28 and 34. Thus, by changing the size of any one of the passages 50a-d relative to the size or sizes of the other passages 50a-d, the mixture ratios at the corresponding impingement points 28 and 34 can be controlled for given combustion fluid densities and average velocities.

In a further example, a non-stoichiometric mixture ratio of oxidizer and fuel can be provided from the second set of passages 52b for impingement at the second impingement point 34. Upon combustion, there can be an excess amount of fuel, which then continues to flow downstream from the injection side surface 32 for combustion with oxidizer streams provided through passages 50a and 50b. In this manner, the combustion region is axially elongated to provide the benefits described above. Moreover, the non-stoichiometric mixing between the oxidizer and the fuel at the second impingement point 34 that is relatively close in proximity to the injection side surface 32 combusts at a relatively lower temperature than a stoichiometric mixture, which mitigates the thermal management burden on the injector 22 and side walls near the injector side surface 32.

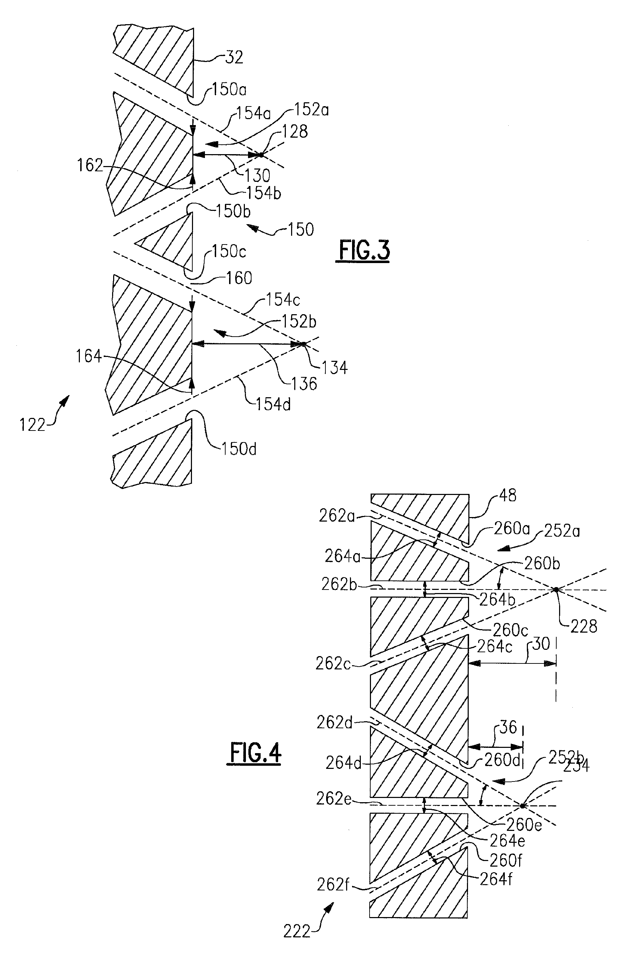

Figure 3 illustrates a modified injector 122 in which spacing between the plurality of passages 150 produces non-equidistant lengths 130 and 136 of respective impingement points 128 and 134. In this disclosure, like reference numerals designate like elements where appropriate and reference numerals with the addition of one-hundred or multiples thereof designate modified elements that are understood to incorporate the same features and benefits of the corresponding elements unless otherwise stated.

The plurality of passages 150a, 150b, 150c and 150d extends along respective directional axes 154a, 154b, 154c and 154d beyond the injection side surface 32 such that the axes 154a and 154b of the first set of passages 152a converge at the first impingement point 128 and the passages 154c and 154d of the second set of passages 152b converge at the second impingement point 134.

Each of the plurality of passages 150 defines a corresponding outlet orifice 160. There is a first spacing 162 between the respective outlet orifices 160 of the passages 150a and 150b, and a second, different spacing 164 between the respective outlet orifices 160 of the passages 150c and 150d. In this example, the angle formed by axes 154a and 154b is equal to the angle formed by the axes 154c and 154d, however, the spacing 164 is greater than the spacing 162. As a result of the difference between the spacings 162 and 164, the impingement length 130 is less than the impingement length 136.

Figure 4 illustrates another modified injector 222 that is similar to the injector 22 of Figure 2. In this example, the injector 222 includes a first set of passages 252a that includes passages 260a, 260b and 260c that extend along respective directional axes 262a, 262b and 262c. The injector 222 also includes a second set of passages 252b that includes passages 260d, 260e and 260f that extend along respective directional axes 262d, 262e and 262f. In the illustrated embodiment, the axes 262b and 262e of respective passages 260b and 260e are perpendicular to the plane of the injection side surface 32. The axes 262a and 262c of respective passages 260a and 260c are transversely oriented with regard to axis 262b, and the axes 262d and 262f of respective passages 260d and 260f are transversely oriented with regard to axis 262e. The directional axes 262a-c intersect at the first impingement point 228 and the directional axes 262d-f intersect at the second impingement point 234.

It is to be understood that the injector 222 can include additional passages around the passage 260b, the passage 260e or both that have axes that impinge upon the respective axes 262b and 262e. Moreover, in some embodiments, one or more conical impingement elements and/or annular flow passages are used in combination with a non-conical impingement element, as illustrated in Figure 2, for example.

The passages 260a-f have respective cross-sectional areas 264a-f. In one embodiment, the cross-sectional areas 264a-f are all equal. In other embodiments, one or more of the cross-sectional areas 264a-f are non-equal to one or more of the other cross-sectional areas 264a-f.

In one embodiment, at least one of the passages 264d-f of the second set of passages 252b is larger than at least one of the cross-sectional areas 264d-f of the other passages. As described above, a larger cross-sectional area provides greater mass flow and thereby influences the mixture ratio at the impingement point 234. For instance, the cross-sectional area 264e may be larger than either of the cross-sectional areas 264d or 264f such that fuel provided through passage 260e is delivered in a non-stoichiometric ratio with regard to oxidant provided through the passages 260d and 260f. That is, there is a stoichiometric excess of fuel delivered through the second set of passages 252b.

Similarly, oxidant may be provided through passage 260b of the first set of passages 252a and fuel or oxidant provided through the passages 260a and 260c. The cross-sectional areas 264a and 264c may be smaller or larger than the cross-sectional area 264b such that there is a non-stoichiometric mixture ratio at the impingement point 228.

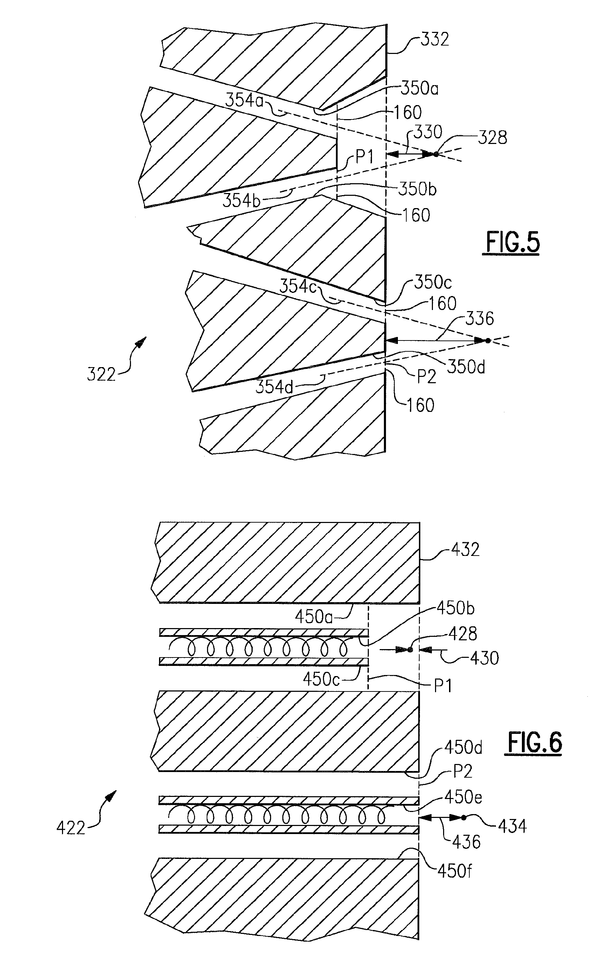

Figure 5 illustrates another modified injector 322 in which aft/forward location of the outlet orifices 160 relative to the injector side surface 332 produces non-equidistant lengths 330 and 336 of respective impingement points 328 and 334. In this example, the outlet orifices 160 of the passages 350a and 350b lie in a first plane P1 and the outlet orifices 160 of the passages 350c and 350d lie in a second plane P2. In this example, the plane P2 lies in a plane defined by the injector side surface 332. The angle formed by axes 354a and 354b is equal to the angle formed by the axes 354c and 354d, however, the plane P1 is offset forward of the injector side surface 332 in comparison to the plane P2. As a result of the difference in arrangement of the planes P1 and P2, the impingement length 330 is less than the impingement length 336. Alternatively, one of the planes P1 or P2 could be arranged to be offset forward of the of the injector side surface 332 to establish different impingement lengths.

Figure 6 illustrates another modified injector 422 in which aft/forward location of the outlet orifices 160 relative to the injector side surface 432 produces non-equidistant lengths 430 and 436 of respective impingement points 428 and 434. The outlet orifices 160 of the passages 450a, 450b and 450c lie in a first plane P1 and the outlet orifices 160 of the passages 450d, 450e and 450f lie in a second plane P2. The plane P2 lies in the plane of the injector side surface 432. In this example, the passages 450a-f are generally parallel, however, the center passages 450b and 450e are configured to provide a swirling flow (shown schematically) such that the swirling flow from passage 450b impinges flow from passages 450a and 450c at impingement point 428 forward of the injector side surface 432 and swirling flow from passage 450e impinges flow from passages 450d and 450f at impingement point 434 aft of the injector side surface 432. Plane P1 is offset forward of the injector side surface 332 in comparison to the plane P2. As a result of the difference in arrangement of the planes P1 and P2, the impingement length 430 is less than the impingement length 436.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. An injector (22;122;222;322;422) comprising:
an injector body (48) having at least an injection side surface (32;332;442);
and
a plurality of passages (50) that extends within the injector body (40) for injecting combustion fluids at the injection side surface (32;332;442), the plurality of passages including,
a first set of passages (52a;152a;252a) having a first arrangement defining a first impingement point (28;128;228;328;428) in space with regard to the injection side surface,
a second, different set of passages (52b;152b;252b) having a second arrangement defining a second impingement point (34;134;234;334;434) in space with regard to the injection side surface (32;332;442), and
the first impingement point (28;128;228;328;428) and the second impingement point (34;134;234;334;434) are non-equidistant from the injection side surface (32;332;442).

2. The injector as recited in claim 1, wherein the plurality of passages extends along respective directional axes (54;262), and the respective directional axes (54a,54b;262a;262c) of the first set of passages (52a;252a) form a first angle and the respective directional axes (54c,54d;262d,262f) of the second set of passages (52b;252b) form a second, different angle.

3. The injector as recited in claim 1 or 2, wherein each of the plurality of passages includes an outlet orifice (160), and the respective outlet orifices (160) of the first set of passages are offset from the impingement side surface (332).

4. The injector as recited in any preceding claim, wherein the plurality of passages (50) extends along respective directional axes, and the first arrangement and the second arrangement are each converging arrangements such that respective directional axes of the first set of passages intersect at the first impingement point (28;128;228;328;428) and the respective directional axes of the second set of passages intersect at the second impingement point (34;134;234;334;434).

5. The injector as recited in any preceding claim, wherein the second impingement point (428) is forward of the injector side surface and the first impingement point (434) is aft of the injector side surface.

6. The injector as recited in any preceding claim, wherein at least one of the first set of passages (52a;152a;252a) or the second set of passages (52b;152b;252b) have non-equal cross-sectional areas.

7. The injector as recited in any of claims 1 to 5, wherein the first set of passages and the second set of passages (52b;152b;252b) have equal cross-sectional areas.

8. The injector as recited in any of claims 1 to 5, wherein one passage of the first set of passages (52a;152a;252a) and one passage of the second set of passages (52b;152b;252b) have non-equal cross-sectional areas.

9. The injector as recited in any preceding claim, wherein at least one passage of the first set of passages (52a;152a;252a) and at least one passage of the second set of passages (52b;152b;252b) split from a common passage.

10. The injector as recited in any preceding claim, wherein the second set of passages (52b;152b;252b) split from a common passage from which at least one of the first set of passages (52a;152a;252a) also splits from.

11. The injector as recited in any preceding claim, wherein at least one of the plurality of passages has a directional axis that is perpendicular to the injection side surface.

12. The injector as recited in any preceding claim, wherein the first set of passages and the second set of passages each have a respective passage with a respective directional axes perpendicular to the injector side surface.

13. A thruster (20) comprising:
a combustion chamber (24) including an internal combustion zone (26); and an injector (22;122;222;322;422) as recited in any preceding claim, said injection side surface (32;332;442) bounding the combustion zone (26), and said plurality of passages (50) for injecting combustion fluids into the combustion zone (26).

14. The thruster as recited in claim 13, including a fuel source (40) and an oxidizer source (38) fluidly connected with the injector (22;122;222;322;422).

15. A method of controlling combustion of fluids, the method comprising:
injecting a first stream and a second stream through respective passages of a first set of passages (52a;152a;252a) within an injector body (40) such that the first stream and the second stream impinge at a first impingement point (28;128;228;328;428) in space relative to an injector side surface (32;332;442) of the injector body (40); and
injecting a third stream and a fourth stream through respective passages of a second, different set of passages (52b;152b;252b) within the injector body (40) such that the third stream and the fourth stream impinge at a second impingement point (34;134;234;334;434) in space, the first impingement point (28;128;228;328;428) and the second impingement point (34;134;234;334;434) being non-equidistant from the injection side surface (32;332;442), wherein, optionally, the third stream is an oxidizer stream and the fourth stream is a fuel stream, and including injecting the oxidizer stream and the fuel stream to impinge with a non-stoichiometric combustion ratio, and optionally the first stream and the second stream are each oxidizer streams.
